# EUROPEAN PATENT APPLICATION

(11) **EP 4 501 573 A1**
(43) Date of publication of application: **05.02.2025**
(21) Application number: 23189895.8
(22) Date of filing: 04.08.2023
(51) Int. Cl.: B29C 33/12, B29C 31/00, B29C 33/16, B29C 33/26, B29C 33/30, B29C 33/34, B29D 99/00, F03D 1/06

(54) **MOVABLE PLATFORM AND METHOD FOR HANDLING A MOVABLE PLATFORM FOR THE MANUFACTURING OF WIND TURBINE BLADES**

(71) Applicant: LM Wind Power A/S, 6000 Kolding (DK)
(72) Inventor: KADAM, Radhika, 6640 Lunderskov (DK)
(74) Representative: Bardehle Pagenberg S.L.

(57) **Abstract**

The present disclosure relates to a system for use in the manufacture of a wind turbine rotor blade (10). The system comprises a support element (82) for supporting a wind turbine rotor blade part. The system further comprises a movable scaffold (70) and a working platform (60) on top of the movable scaffold (70). The movable scaffold (70) is configured to move from a first position to a working position, wherein the working position is closer to the support element or to the wind turbine rotor blade part than the first position and is suitable for carrying out a blade manufacturing step. The system further comprises that the movable scaffold (70) and/or the support element comprise a retention system for retaining the movable scaffold (70) in the working position. The present disclosure further comprises a method for manufacturing a wind turbine rotor blade.

## Description

### FIELD

The present disclosure relates to wind turbine blades, and more particularly, to a movable platform for manufacturing wind turbine blades. The disclosure further concerns a method for manufacturing wind turbine blades.

### BACKGROUND

Modern wind turbines are commonly used to supply electricity into the electrical grid. Wind turbines of this kind generally comprise a tower and a rotor arranged on the tower. The rotor, which typically comprises a hub and a plurality of blades, is set into rotation under the influence of the wind on the blades. This rotation generates a torque that is normally transmitted through a rotor shaft to a generator, either directly (in the case of "directly driven" or "gearless" wind turbines) or through the use of a gearbox. This way, the generator produces electricity which can be supplied to the electrical grid.

The wind turbine hub may be rotatably coupled to a front of the nacelle. The wind turbine hub may be connected to a rotor shaft, and the rotor shaft may then be rotatably mounted in the nacelle using one or more rotor shaft bearings arranged in a frame inside the nacelle. The nacelle is a housing arranged on top of a wind turbine tower that may contain and protect the gearbox (if present) and the generator (if not placed outside the nacelle) and, depending on the wind turbine, further components such as a power converter, and auxiliary systems.

The wind turbine blades are often made of fiber-reinforced polymer and are usually manufactured as shell parts in molds, whereby the top side and the bottom side of the blade profile (typically the upwind or pressure side and the downwind or suction side, respectively) are manufactured separately by arranging glass fiber (e.g. fiber mats) in each of the two molds and injecting a liquid resin, which subsequently is cured. Afterwards, the two halves are glued together, often by means of internal flange parts. Glue is applied to the inner face of the lower blade half before the upper blade half is lowered thereon or *vice versa.* Additionally, one or two reinforcing profiles (beams) are often attached to the inside of the lower blade half prior to gluing to the upper blade half. A crane or hoisting assembly may be used to lift one of the mold parts about a hinge line for closure and opening of the molds. Throughout this disclosure, a mold will primarily refer to each of the mold parts used for the manufacture of a blade shell part.

After gluing the two halves, the blade is demolded, i.e. it is removed from the mold, and some finishing work is carried out to complete manufacturing of the blade. Such finishing work may include trimming, painting and/or mounting final fittings, e.g. aerodynamic devices, on the wind turbine blade.

It is known to manufacture wind turbine blades where each of the wind turbine blades is molded and mostly assembled at the same workstation. Once the two halves are glued, it is known to move the demolded blade to another workstation, typically a finishing workstation. However, as the demand for wind turbines is rapidly increasing, it is found increasingly difficult to scale this known manufacturing method. An alternative manufacturing method and alternative manufacturing line, which comprises "moving molds", is proposed in EP2403708. In this method, the manufacturing line comprises a number of separate workstations, where separate manufacturing steps are carried out as the mold is moved to each workstation. Each workstation can be equipped with specialized and advanced equipment that is dedicated to the manufacturing step carried out at the workstation.

In all cases, different blade manufacturing steps require operators to access a working area, i.e. the mold area for steps carried out before the demolding step or the length of the demolded blade for steps related to blade finishing works. Furthermore, different materials and tools may be required at different manufacturing steps, which should be accessible to the operators while working in the mold area or around the demolded blade. These requirements are typically achieved by providing scaffold systems, which comprise working platforms on which operators may stand while accessing the working area. The working platforms may also be used to store materials and tools required for the manufacturing step. Scaffold systems are typically designed and customized for every blade mold used during blade manufacturing or for every blade and they comprise scaffold structures, which are arranged in a fixed manner, to provide access to the working area. To that end, scaffolds typically comprise vertical beams that are fixed to the ground, so as to transfer loads to the ground.

Alternatively, scaffolds may be attached to the mold structure so that the scaffolds are suspended from the mold structure and may hover above ground level in a cantilevered manner. An example of such an arrangement may be found in WO2017009424A1.

It is an object of the present disclosure to provide cost-effective and safe systems and methods for providing access to the working area during manufacturing of a wind turbine blade.

### SUMMARY

In an aspect of the present disclosure, a system for use in the manufacture of a wind turbine rotor blade comprises a support element for supporting a wind turbine rotor blade part. The system further comprises a movable scaffold and a working platform on top of the movable scaffold. The movable scaffold is configured to move from a first position to a working position, wherein the working position is closer to the support element or to the wind turbine rotor blade part than the first position and is suitable for carrying out a blade manufacturing step. The movable scaffold and/or the support element comprise a retention system for retaining the movable scaffold in the working position.

According to this aspect, a movable scaffold is provided which can be moved to a working position in an area of the wind turbine rotor blade part so that a manufacturing step for which access to that area is needed can be carried out. By virtue of being movable, the scaffold may be arranged in a separate position further away from the support element or away from the wind turbine rotor blade part being manufactured. In this manner, increased flexibility for the manufacturing line is achieved. In particular, certain activities may be carried out more conveniently in a first position that is separate from the working position. As an example, materials and tools needed for the blade manufacturing step may be loaded on the working platform before moving the scaffold to the working position, i.e. while the movable scaffold is in the first position. As a result, materials and tools may be readily available when the manufacturing step is conducted in the working position. Furthermore, the movable scaffold is independent from the support element, so that the same movable scaffolds can be used with different support elements, including support elements of different sizes and different shapes intended for the manufacture of different blades. A retention system is arranged to retain the movable scaffold in a working position. The system according to this aspect of the disclosure provides a safe environment for the operators while working in the working area

In another aspect of the disclosure, a method for manufacturing a rotor blade is provided. The method comprises providing a support element for supporting a wind turbine rotor blade part in a workstation and moving a movable scaffold, the movable scaffold supporting a working platform, from a first position to a working position closer to the support element or from a first position to a working position closer to the wind turbine rotor blade part. The method further comprises retaining the movable scaffold in the working position and carrying out a blade manufacturing step. Finally, the method comprises releasing the movable scaffold from the working position and moving the movable scaffold away from the support element or moving the movable scaffold away from the wind turbine rotor blade part to a third position.

According to this aspect, the method allows a flexible manufacturing process by enabling the positioning of a scaffold in different positions during blade manufacturing. In particular, the scaffold with its corresponding platform may be arranged and retained in a working area in the proximity of the blade part to conduct certain manufacturing steps for which access to that area is needed whereas the scaffold may be moved to a different position to conduct other operations not requiring access to that working area.

In yet another aspect, a further method for manufacturing a rotor blade is provided. The further method comprises moving a blade mold to a workstation and moving a movable scaffold, which supports a working platform, from a first position to a working position closer to the blade mold. The method further comprises retaining the movable scaffold in the working position and carrying out a blade manufacturing step. After that, the movable scaffold is released from the working position and moved away from the blade mold to a third position. Finally, this further method comprises moving the blade mold out of the workstation.

According to this further aspect of the invention, the efficiency and the flexibility of the blade manufacturing line may further be improved. Thus, a blade mold may be moved to different workstations and each of the workstations may be configured to carry out a specific manufacturing step. In order to move the blade mold, a movable frame may be provided for supporting the blade mold. As a non-limiting example, multiple workstations may be distributed in the manufacturing line and each of them may be specialized to implement one of the following methods: arranging the glass fiber in a blade mold, supplying curable matrix material, infusing curable material, bonding of two blade shell parts, etc. In order to provide enhanced capabilities to the manufacturing line, a system comprising movable scaffolds is arranged at the workstation and it is moved from a first position to a working position in the area of the blade mold where a manufacturing step is to be executed. In order to carry out the manufacturing step in a safe manner, a retention system is used to retain the movable scaffold in the working position, i.e. to keep the movable scaffold in position. After completion of the manufacturing step, the method allows the separation of the movable scaffold from the blade mold and also the movement of the blade mold out of the workstation. In that manner, the workstation can be ready to receive a new blade mold to conduct the manufacturing step for a new blade and, to that end, the movable scaffold is configured to move back to the working area of the newly provided blade mold.

Throughout this disclosure, a scaffold is interpreted as any temporary structure used to support platforms for a work crew and/or for materials to aid in the manufacture, maintenance, repair, etc. of structures while working at a height above ground or floor level. Also throughout this disclosure, a wind turbine rotor blade part is interpreted as any part of a wind turbine blade regardless of the stage in the manufacturing process. By way of non-limiting examples, a part of a wind turbine blade may refer to glass fiber mats deposited on a blade mold (early stage of the manufacturing process), or a manufactured half blade shell, but it also may refer to a demolded complete blade awaiting only for the finishing works (advanced stage of the manufacturing process) or even after having undergone finishing works.

### BRIEF DESCRIPTION OF THE DRAWINGS

Figure 1 illustrates a perspective view of an example of a wind turbine;
Figure 2 illustrates a perspective view of an example of a wind turbine blade;
Figures 3A and 3B schematically illustrate a support element and a scaffold system in a first position according to an example;
Figures 4A and 4B schematically illustrate a support element and scaffold system in a working position according to an example;
Figures 5A- 5B schematically illustrate a support element and a scaffold system in a working position according to another example;
Figure 6A - 6B schematically illustrate an example of a scaffold system comprising a gap closing plate;
Figures 7A - 7B schematically illustrate an example of a working platform comprising extension planks;
Figure 8 schematically illustrates an example of a scaffold system comprising adjustable height;
Figures 9A and 9B schematically illustrate an example of a scaffold system comprising handrails;
Figure 10 schematically illustrates a production line according to an example;
Figure 11 is a flow diagram of a method for manufacturing a rotor blade according to an example; and
Figure 12 is a flow diagram of a method for manufacturing a rotor blade according to a further example.

### DETAILED DESCRIPTION OF EXAMPLES

Reference will now be made in detail to examples of the present disclosure, one or more examples of which are illustrated in the drawings. Each example is provided by way of explanation only, not as a limitation. In fact, it will be apparent to those skilled in the art that various modifications and variations can be made in the present disclosure. For instance, features illustrated or described as part of one example can be used with another example to yield a still further example. Thus, it is intended that the present disclosure covers such modifications and variations as come within the scope of the appended claims and their equivalents.

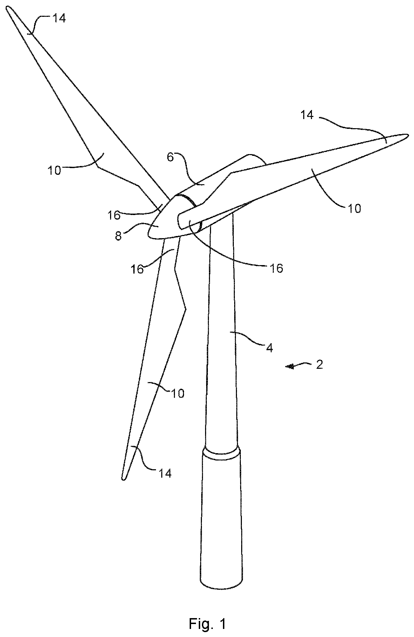

Fig. 1 illustrates a conventional modern upwind wind turbine 2 according to the so-called "Danish concept" with a tower 4, a nacelle 6 and a rotor with a substantially horizontal rotor shaft. The rotor includes a hub 8 and three blades 10 extending radially from the hub 8, each having a blade root 16 nearest the hub and a blade tip 14 furthest from the hub 8.

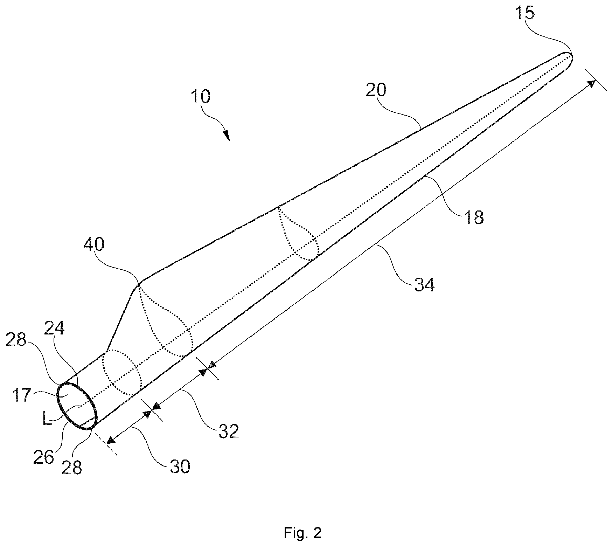

Fig. 2 shows a schematic view of an example of a wind turbine blade 10. The wind turbine blade 10 has the shape of a conventional wind turbine blade with a root end 17 and a tip end 15 and comprises a root region 30 closest to the hub, a profiled or an airfoil region 34 furthest away from the hub and a transition region 32 between the root region 30 and the airfoil region 34. The blade 10 comprises a leading edge 18 facing the direction of rotation of the blade 10, when the blade is mounted on the hub, and a trailing edge 20 facing the opposite direction of the leading edge 18.

The airfoil region 34 (also called the profiled region) has an ideal or almost ideal blade shape with respect to generating lift, whereas the root region 30 due to structural considerations has a substantially circular or elliptical cross-section, which for instance makes it easier and safer to mount the blade 10 to the hub. The diameter (or the chord) of the root region 30 may be constant along the entire root area 30. The transition region 32 has a transitional profile gradually changing from the circular or elliptical shape of the root region 30 to the airfoil profile of the airfoil region 34. The chord length of the transition region 32 typically increases with increasing distance from the hub. The airfoil region 34 has an airfoil profile with a chord extending between the leading edge 18 and the trailing edge 20 of the blade 10. The width of the chord decreases with increasing distance from the hub.

A shoulder 40 of the blade 10 is defined as the position, where the blade 10 has its largest chord length. The shoulder 40 is typically provided at the boundary between the transition region 32 and the airfoil region 34.

It should be noted that the chords of different sections of the blade normally do not lie in a common plane, since the blade may be twisted and/or curved (i.e. pre-bent), thus providing the chord plane with a correspondingly twisted and/or curved course, this being most often the case in order to compensate for the local velocity of the blade being dependent on the distance to the hub.

The wind turbine blade 10 comprises a blade shell comprising two blade shell parts or half shells, a first blade shell part 24 and a second blade shell part 26, typically made of fiber-reinforced polymer. The wind turbine blade 10 may comprise additional shell parts, such as a third shell part and/or a fourth shell part. The first blade shell part 24 is typically a pressure side or upwind blade shell part. The second blade shell part 26 is typically a suction side or downwind blade shell part. The first blade shell part 24 and the second blade shell part 26 are fastened together with adhesive, such as glue, along bond lines or glue joints 28 extending along the trailing edge 20 and the leading edge 18 of the blade 10. Typically, the root ends of the blade shell parts 24, 26 have a semi-circular or semi-oval outer cross-sectional shape.

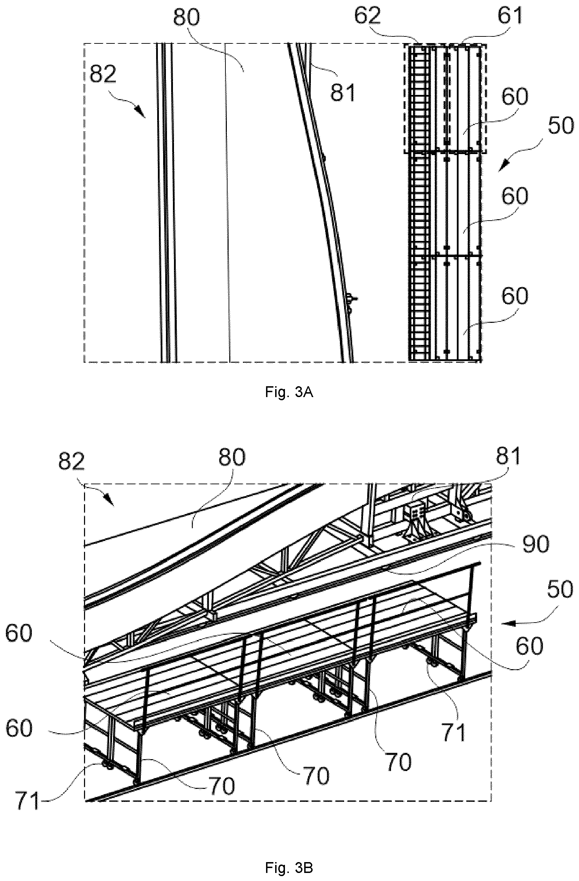

Figures 3A and 3B show an example of a system for use in the manufacture of a wind turbine rotor blade. The system comprises a support element 82 for supporting a wind turbine rotor blade part. In the depicted example, the support element 82 may comprise a blade mold 80. The blade mold 80 may be used during certain blade manufacturing steps such as arrangement of the glass fiber reinforcement material, supply of curable matrix material, infusion of curable material or curing of the curable material. The support element 82 may also comprise a mold frame 81 to support the blade mold 80.

In other examples of the disclosure (not shown in the figures), the support element 82 may comprise at least one cart for supporting a wind turbine rotor blade part and, more specifically, for supporting a complete wind turbine rotor blade. These other examples may be specifically suited for manufacturing steps comprising finishing of a wind turbine blade after bonding of the two blade shell parts and after demolding.

The system further comprises a scaffold system 50 The scaffold system 50 in this example comprises three movable scaffolds 70 and a working platform 60 on top of each movable scaffold. The movable scaffolds 70 are shown in a first position which may be relatively away from the blade mold 80.

In the example of Figures 3A and 3B, wheels 71 are provided to enable movement of the movable scaffolds 70. Nevertheless, other systems enabling movement such as sliding pads may also be used.

Figure 3B also shows that the support element 82 for supporting the wind turbine rotor blade part may be movable. To this end, a set of wheels 90 is shown under the mold frame 81 to enable displacement in the longitudinal direction. By enabling such movement, increased flexibility may be provided as a blade mold 80 may be transferred from a different location in the assembly line to the location depicted in Figure 3B so that specialized manufacturing steps may be carried out at different workstations.

The working platforms 60 depicted in this example may comprise a materials area 61 and an operator area 62. The materials area 61 may be used to store all the tools and materials needed for the blade manufacturing step, whereas the operator area 62 may be designed so that work crew can stand on the working platform 60 while carrying out the blade manufacturing step. To this end, the width of the working platforms may be sufficient to account for the two areas.

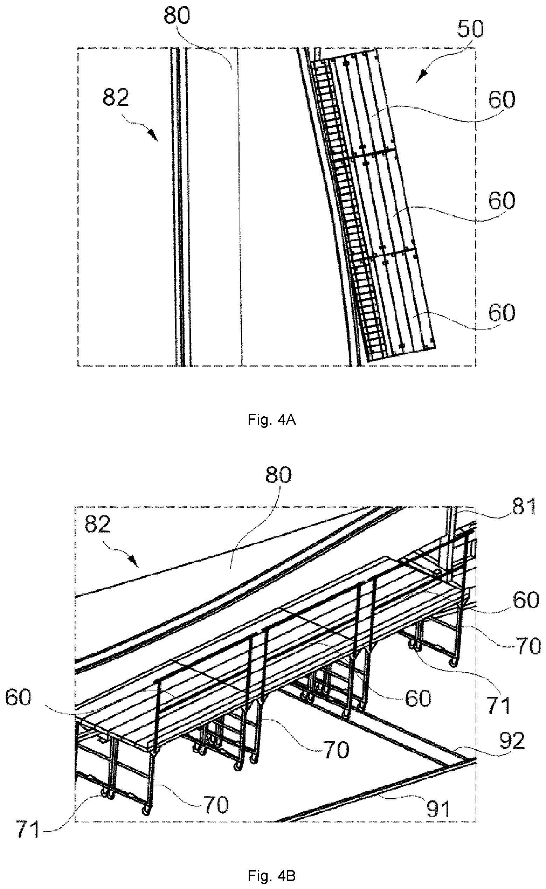

Figures 4A and 4B show an example of a scaffold system 50 for use in the manufacture of a wind turbine rotor blade in a working position wherein the system 50 comprises a plurality of movable scaffolds 70 supporting corresponding working platforms 60, the movable scaffolds 70 being arranged such that the working platforms 60 are adjacent to each other in their respective working positions. By arranging multiple working platforms 60 in an adjacent manner, a certain portion of the blade mold 80 may be reachable while keeping the length of the individual movable scaffolds 70 relatively short (e.g. of a few meters). The adjacent arrangement shown in Figures 4A and 4B may minimize the presence of gaps at the lateral ends of the working platforms 60, thus increasing the safety of the system.

The movable scaffolds 70 are configured to move from a first position to a working position, wherein the working position is closer to the blade mold 80 than the first position as shown in Figures 4A and 4B. The working position is suitable for carrying out a blade manufacturing step. Furthermore, the movable scaffold 70 and/or the blade mold 80 comprise a retention system for retaining the movable scaffold 70 in the working position. A working position is understood as a position that is suitable for carrying out a blade manufacturing step. In this example, the working position corresponds to a situation where the working platforms 60 are substantially in contact with the blade mold 80, so that gaps between the working platforms 60 and the blade mold 80 may be minimized. In this manner, access to the blade mold 80 by operators standing on the platform 60, and more specifically, on the operator platform area 62 previously depicted in Figure 3A, may be provided in a safe manner.

The system shown in Figures 4A and 4B may further comprise sensors to monitor the relative position between the working platforms 60 and the support element 82 which, in this case, comprises a blade mold 80 and a blade frame 81. By using a sensor system, moving of the movable scaffolds 70 from the first position to the working position may be further controlled, thus increasing safety. More specifically, a proximity sensor may be used to detect the proximity between the movable scaffold 70 and the blade mold 80 and/or the blade frame 81 or even to detect an initial contact between them. In examples of the disclosure, different types of sensors such as, but not limited to, electromagnetic sensors, capacitive sensors, ultrasonic sensors, or photoelectric sensors may be implemented.

In further examples of the disclosure (not shown in the figures), the system may comprise sensors to monitor a relative position between the working platforms 60 and the wind turbine rotor blade part supported by the supported element 82. Such examples may be particularly useful for manufacturing steps comprising an already demolded blade, i.e. a blade whose two blade shell parts may have been already bonded together. At such advanced manufacturing stages, a blade may be supported by a plurality of carts distributed at different discrete positions along the length of the blade so that sensors monitoring a relative position with respect to the blade itself may be advantageously used.

The movable scaffold 70 and/or the support element 82 comprise a retention system that is arranged to retain the movable scaffold 70 in the working position. In examples, both the movable scaffold 70 and the support element 82 may comprise complementary retention systems. In further examples, a retention system of the movable scaffold 70 may also cooperate or engage with a system on the factory floor.

A retention system may be provided in any suitable part of the support element 82. For example, it should be understood that the blade mold 80 may be supported by a mold frame 81, in which case the retaining system may be arranged in the blade mold 80 and/or in the mold frame 81.

Different retaining elements may be envisaged in different examples. For instance, a locking mechanism may be arranged on the wheels 71 of the movable scaffold. Said locking mechanism may be activated once the movable scaffold 70 is in the working position which, in some examples, may be determined by a sensor system used to monitor the position between the working platform 60 and the support element 82 and/or a wind turbine blade part. In other examples, no such sensor is used and the relative position may be visually monitored, in which case the locking mechanism may be actuated manually.

In another example, the retention system may comprise a magnetic mechanism. More specifically, the retention system may comprise at least one electromagnet configured to connect the movable scaffold 70 with the support element 82 or, more particularly, with the blade mold 80. In this example, the blade mold 80 and the movable scaffold 70 may be directly connected, i.e. not only is the position of the movable scaffold 70 retained, but a direct connection with the blade mold 80 may be established. With this example, the relative position between the different parts is further ensured, thus increasing operability and safety of the operation. In yet further examples, the retention system may be manually activated or engaged, and manually deactivated and disengaged.

Also visible in Figures 4A and 4B, in examples of the disclosure the system may further comprise guides 91, 92 on a floor to guide the movable scaffold 70. Guides may be arranged in different directions. More specifically, longitudinal guides 91 may be arranged in a direction substantially aligned with a lengthwise direction of the blade mold 80. Furthermore, additional guides 92 may be arranged in a direction running from a first position for the movable scaffolds 70 to a working position. In particular, parts of the guides 91, 92 may be arranged in a transverse direction, i.e. substantially perpendicular to the lengthwise direction of the blade mold.

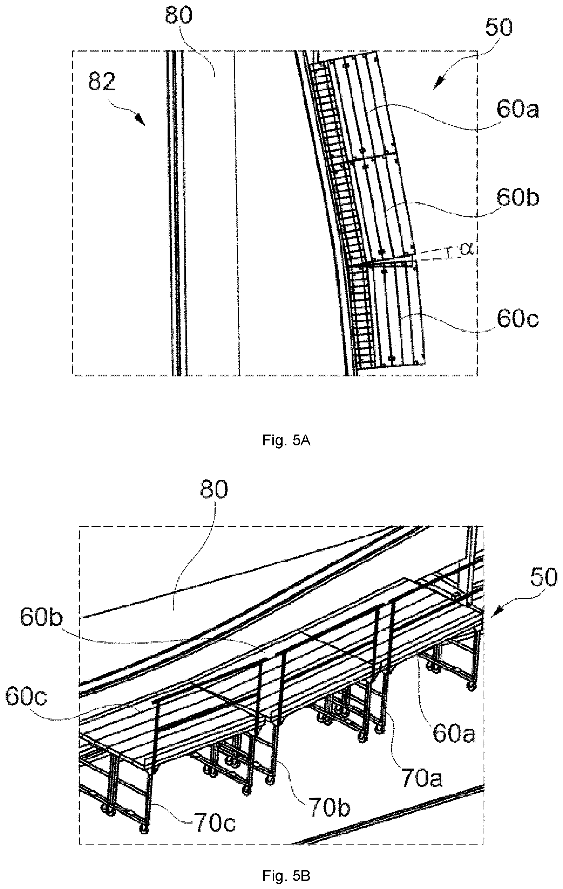

Figures 5A and 5B depict another example of the disclosure. In this example, three movable scaffolds 70a, 70b, 70c with their corresponding working platforms 60a, 60b and 60c are shown. Similarly to the example in Figures 4A and 4B, the three movable scaffolds 70 and their respective platforms 60 are arranged adjacent to each other. Nevertheless, in this example, one of the working platforms 60c is arranged with an inclination (see angle α) with respect to the working platforms 60a and 60b. With this example, a better match to the curvature of the blade mold 80 may be achieved. By conforming to the shape of the blade mold 80, the gap between the blade mold 80 and the working platforms 60 may be minimized. Thus, the movable scaffolds 70 may not only move in a translation movement but they may also move in a pivot movement, so that they may be arranged, in their respective working positions, with an angle α with respect to each other. One or more of the movable scaffolds may be connected to another scaffold through one or more hinges allowing the pivotal movement.

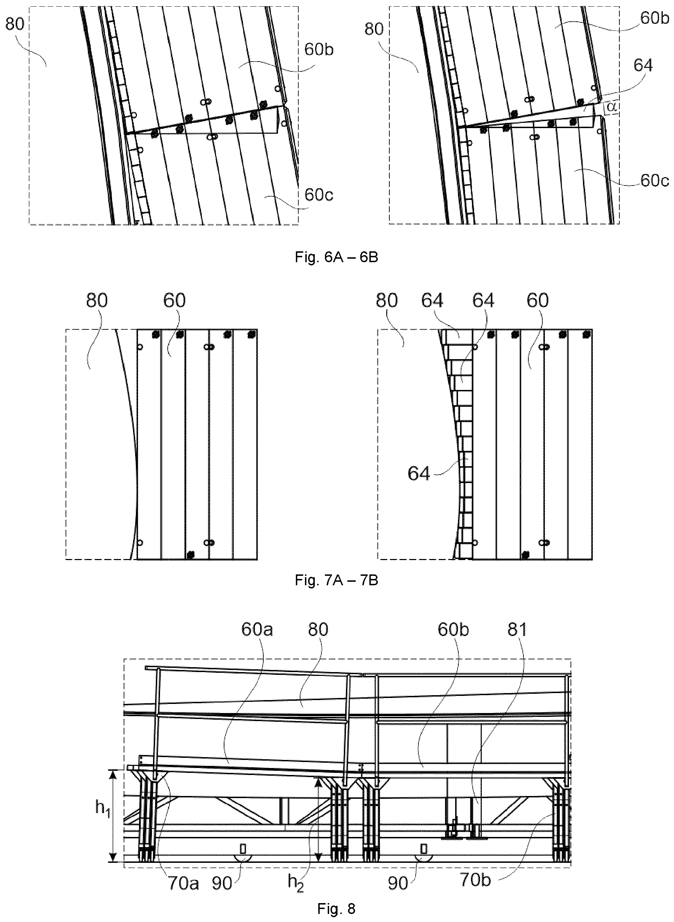

Figures 6A and 6B provide a more detailed view of the region between the blade mold 80 and the working platforms 60 according to examples of the disclosure. On one hand, Figure 6A illustrates an example with two working platforms 60b and 60c arranged adjacent to each other with no angle between them. As a result of the curvature of the blade mold 80, this example results in a certain gap at the interface between the blade mold 80 and, in this case, working platform 60c. On the other hand, Figure 6B illustrates an example with two working platforms 60b and 60c arranged adjacently to each other but with a certain angle, α, between them. This angle is a result of the better match between the working platforms 60 and the blade mold 80. Thus, in this example, platform 60c is inclined by a certain angle to increase its contact with the blade mold 80 so that a gap between the blade molt 80 and the working platform 60c may be minimized.

An effect of the example shown in Figure 6B is that a gap may appear in between the lateral sides of adjacent platforms 60 when they are arranged at an angle. Thus, in a further example of the disclosure, the working platforms 60 may comprise plates 64 at their lateral ends configured to close a gap between adjacent working platforms 60. Said plates 64 may then reduce the risk of materials or even an operator falling. Different types of plates 64 may be used and they may be fixed in different forms. Specifically, a sliding plate may be fixed underneath one of the adjacent working platforms 60. The sliding plate may be arranged to extend beyond the lateral end of the respective working platform 60 and it may be further arranged to slide underneath the adjacent working platform 60 so as to close any gap between the lateral ends of the adjacent working platforms. Alternatively, in other examples of the disclosure, a separate plate may be fastened, e.g. by bolts, at respective ends of the working platforms 60 to close any existing gap.

Figures 7A and 7B illustrate a further example of a working platform 60 which, in this case, comprises one or more extension planks 64 arranged along an edge of the working platform 60. The extension planks 64 may be configured to extend individually from a retracted position. In this example, the extensions planks 64 may be arranged along the edge of the working platform 60 configured to face the blade mold 80. Extension planks 64 may be used to align better with the blade mold 80. This may be especially relevant for working platforms 60 intended for work in the shoulder 40 area of the blades where blades exhibit largest chord lengths. In that area, very significant curvatures are present on the blade mold 80 so it may be difficult for a working platform 60 to accommodate. The minimization or reduction of the gap between the working platform 60 and the blade mold 80 may be desirable in order to mitigate the risk of material falling or even safety risk for the operators.

Figure 7A depicts the situation where the extension planks 64 are in their retracted position so they are not visible and a gap exists between the blade mold 80 and the working platform 60. Figure 7B shows the extension planks 64 in their extended position. Thus, each extension plank 64 may be extended until it substantially abuts on the blade mold 80 and it closes the gap with the blade mold 80.

Furthermore, extension planks 64 may be individually actuated so as to better reduce any gap between the working platform 60 and the blade mold 80. Different actuation systems may be employed for the extension planks 64. As an example, extension planks 64 may be actuated with a hydraulic or electromechanical actuator and a contact or proximity sensor may be used to determine contact of the individual extension planks 64 and the blade mold 80. Alternatively, manual actuation may also be used. In this example, extension planks 64 may be manually extended by an operator and then fixed at the right position by a fastening system, such as bolting.

Figure 8 illustrates another example of a movable scaffold 70. In particular, a side view of two movable scaffolds 70a and 70b in their respective working positions is provided. In this example, the height of the movable scaffolds 70 is adjustable and, more specifically, the movable scaffold 70 is configured to enable different heights at its lateral ends. This is illustrated in this example with reference to the movable scaffold 70a, whose scaffolding comprises some legs at both lateral ends. In this example, the height of those legs may be adjusted so that the height at one end, h₁, is slightly higher than the height, h₂, at the other end. Of course, the specific values of the heights may be selected depending on specific needs. Thus, manufacturing steps at the blade mold 80 may require operators to work at different relative heights with respect to the blade mold 80. This may be particularly the case for very large wind turbine blades. In this example, the use of different heights at the ends of the movable scaffold 70a may result in an inclined working platform 60a (not directly visible in Figure 8) so that the system may easily adapt to varying heights, thus facilitating the tasks of the operators. Different systems may be used to adjust the height of the legs of the movable scaffold 70. In examples, these may include automatic or hydraulic actuators whereas, in other examples, a manual actuation may be used.

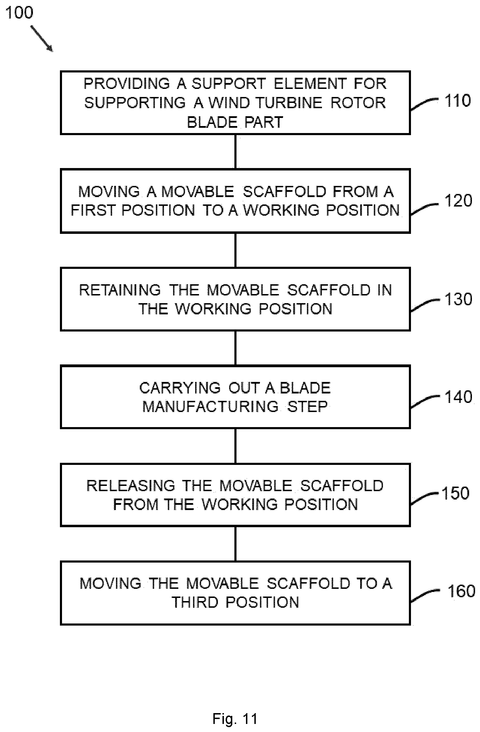

Figure 8 shows a mold frame 81 supporting the blade mold 80. In this example, the mold frame 81 is equipped with some wheels 90, which allow the blade mold 80 to be moved in a longitudinal direction. The advantages of such an arrangement will become apparent while discussing some methods according to examples of this disclosure and, more specifically, while discussing the method example of Figure 11.

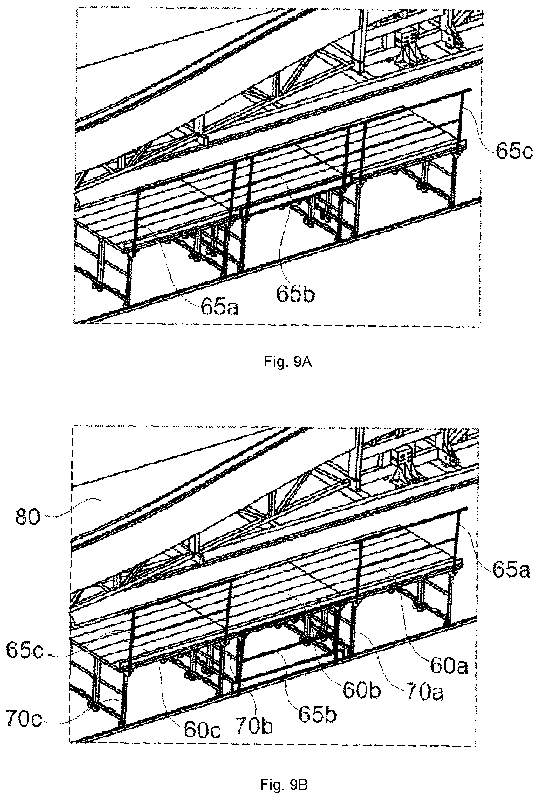

Still a further example is depicted in Figures 9A and 9B. In this example, movable scaffolds 70 comprise handrails 65, which may be configured to operate in two states, more specifically, in a material loading state and in a working state. Figure 9A shows a situation where three different movable scaffolds 70 (70a-70c) are arranged adjacent to each other with their corresponding working platforms 60 (60a-60c). Each of those scaffolds is provided with a handrail (65a-65c). All the handrails 65 are shown in a working position, i.e. all handrails 65 are in an elevated position, which provides safety to the operators. This position may be the preferred state while the movable scaffold 70 is in the working position in the proximity of the blade mold 80. On the other hand, Figure 9B shows a situation with the handrail 65b of the intermediate movable scaffold 70b in a so-called loading state. In this case, the handrail 65b is lowered. This may allow easy access to the working platform 60b from both front and rear sides, which may be convenient to load materials and/or tools needed for the manufacturing step.

Different mechanisms may be used in different examples to enable the transition of the handrails 65 from one state to the other. A hinge may be arranged to allow pivoting of the handrails 65 about a horizontal axis arranged substantially at the connection between the handrail 65 and the working platform 60. In further examples, a guiding system may be arranged allowing sliding of the handrail 65 in a vertical direction to move from one state to the other.

The number and arrangement of the movable scaffolds 70 may depend on the specific application. In some examples, a plurality of movable scaffolds 70 may be arranged substantially surrounding the support element 82, which in some examples may comprise surrounding a blade mold 80. In other examples, the plurality of movable scaffolds 70 may be provided substantially surrounding a blade part supported by the support element 82. This surrounding arrangement may be used for certain manufacturing steps for which access to the whole area of, e.g. the blade mold 80, may be preferred. These manufacturing steps may comprise arranging the glass fiber mats in the blade mold 80, supplying curable matrix material or infusing curable material.

In other examples, one or more movable scaffolds 70 may extend in their working positions along a portion of the support element 82, which in some examples may comprise extending along a portion of the blade mold 80. The one or more movable scaffolds 70 may be configured to be movable in the longitudinal direction of the support element 82. In these examples, the operators may carry out certain tasks over a portion of the blade mold 80. Upon completion of those tasks, the movable scaffolds 70, together with the working platforms 60, may be moved to a contiguous region of the blade mold 80 to continue working.

In further examples, the movable scaffolds 70 may extend along a portion of wind turbine rotor blade part supported by the support element 82. In this case, the movable scaffolds 70 may be configured to be movable in the longitudinal direction of the wind turbine rotor blade part. This example may be preferred in certain tasks such as those concerned with blade finishing (e.g. sanding, grinding, painting, testing, or attachment of aerodynamic devices).

Another example of this disclosure may comprise a production line for manufacturing a wind turbine blade. The production line may comprise a first workstation, a second workstation, one or more blade molds for manufacturing one or more wind turbine blade shell parts, and a mold conveyor system for conveying the one or more molds from the first workstation to the second workstation. The first workstation and/or the second workstation may comprise a scaffold system according to any of the examples provided above with reference to the different figures. Such a production line may benefit from the advantages of using specialized workstations for different manufacturing steps. These include, among others, higher efficiency, and higher quality due to increased specialization of the teams. Similarly, the scaffold system 50 may be specialized for the manufacturing step and, for instance, it may be arranged to receive the adequate materials and tools for the manufacturing step carried out at the specific workstation.

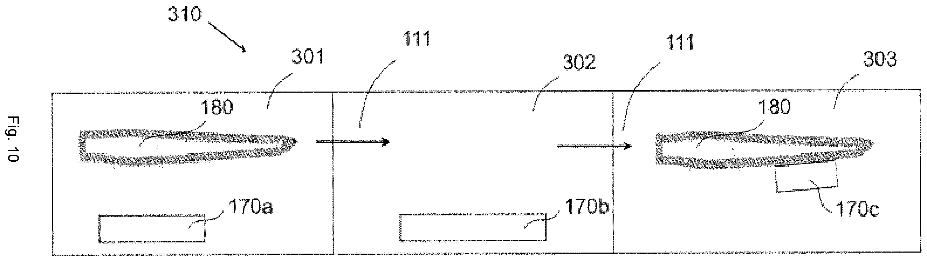

Figure 10 schematically illustrates a production line 310 according to an example. The production line comprises three different workstations 301-303. A blade mold 180 is schematically illustrated at two different stages of the blade manufacturing process. Thus, the blade mold 180 is first arranged in workstation 301 where a certain manufacturing step may be carried out. A conveyor system may be provided to move the blade mold 180 along the longitudinal direction represented by the arrows 111. Figure 10 shows also the blade mold 180 at a later stage of the manufacturing process which, in this example, may be carried out at workstation 303. Movable scaffolds 170a-170c may be provided at each workstation 301-303. Different scaffolds, e.g. of different dimensions, may be arranged in each workstation according to the needs of the manufacturing step to be carried out at the respective workstation. Furthermore, movable scaffolds 170a-170c may be movable between a first position and a working position. In that sense, Figure 10 depicts two movable scaffolds (170a and 170b) in a first position, whereas the movable scaffold 170c in the third workstation 303 is shown in a working position which, in this case, comprises a position substantially in contact with a portion of the blade mold 180.

With examples of the system described herein, a method 100 for manufacturing a wind turbine rotor blade according to a further aspect of the present disclosure is enabled. This method 100 is further exemplified by the flowchart presented in Figure 11. The method comprises, at block 110, providing a support element for supporting a wind turbine rotor blade part in a workstation and, at block 120, moving a movable scaffold, the movable scaffold supporting a working platform, from a first position to a working position closer to the support element or to the wind turbine rotor blade part. The method 100 then comprises, at block 130, retaining the movable scaffold in the working position. At block 140, the method comprises carrying out a blade manufacturing step. After that, the movable scaffold is released from the working position at block 150. Finally, at block 160, the method 100 comprises moving the movable scaffold away from the support element or from the wind turbine rotor blade part to a third position.

With this method 100, a flexible manufacturing of wind turbine blades is obtained. The same movable scaffold may be used with different blade molds and operator safety is enhanced by retaining the movable scaffold. Furthermore, in examples of the disclosure, providing the support element for supporting a wind turbine rotor blade part in a workstation may comprise moving the support element. By facilitating movement of the support element, different manufacturing steps may be carried out at different locations of the manufacturing plant while maintaining the same support element which, in some variants, may comprise a blade mold. Accordingly, increased flexibility and efficiency may be achieved during manufacturing of wind turbine rotor blades.

Some activities may be carried out on the movable scaffold before arranging it in the working position intended for carrying out the blade manufacturing step. In examples of the disclosure, a method may comprise storing the materials to be used for the blade manufacturing step on the working platform while the movable scaffold is in the first position. Such pre-loading of materials and tools may result in a more efficient work flow.

In an example, moving the movable scaffold away from the support element or from the wind turbine rotor blade part to a third position may comprise that the third position is the same as the first position. In this manner, only two positions may be defined for the movable scaffold: a position where the movable scaffold is in a so-called working position, i.e., a position where work is carried out on the blade mold or on a blade part area; and a different position where the movable scaffold may be parked during non-working periods or where operations not requiring access to the blade mold or to the blade part area may be carried out. By defining two positions, guiding of the movable scaffold may also be facilitated by providing guides. In that sense, some other examples of the method may comprise guiding the movable scaffolds via guides arranged in the floor of the workstation. Such guides may allow for a method that increases efficiency and safety while transferring the movable scaffold from one position to another position.

In another example of the disclosure, block 120 may comprise moving the movable scaffold to a position where substantially no gaps exist between the working platform supported by the movable scaffold and the support element or the wind turbine rotor blade part supported by the support element as explained with reference to Figures 4A-4B or 5A-5B. More specifically, the support element may comprise a blade mold and block 120 may comprise moving the movable scaffold to a position where substantially no gaps exist between the working platform supported by the movable scaffold and the blade mold This example may ensure easier accessibility to the blade mold which may increase, not only efficiency, but also safety of the working operations. Indeed, by minimizing the space between the working platform and the blade mold, risks associated with material falling may be significantly reduced. Similarly, the risk of an operator stumbling or even falling may also be mitigated.

In still a further example of a method for manufacturing a blade, the working platform may comprise one or more extension planks arranged along an edge of the working platform facing the support element or the wind turbine rotor blade part as shown in Figures 7A-7B. The extension planks may be individually extended from a retracted position to an extended position so as to reduce a gap between the working platform and the support element or between the working platform and the wind turbine rotor blade part supported by the support element. This example may allow for a precise minimization of a gap between the working platform and the support element, which in some cases may comprise a blade mold, or between the working platform and a part of a blade where a manufacturing step may be carried out. In variants of this example, the extension planks may be manually extended by an operator after retaining the movable scaffold in the working position. In other variants, the extension of the planks may be carried out, either manually or automatically, while moving the movable scaffold from the first position to the working position and then the movable scaffold may be retained after the extension planks are properly arranged in a configuration reducing the gap between the blade mold and the working platform.

Block 120, regarding moving the movable scaffold to a working position as explained in, e.g. Figures 4A-4B, may in some examples comprise using sensors to monitor the relative position between the working platform supported by the movable scaffold and the support element or between the working platform supported by the movable scaffold and the wind turbine rotor blade part supported by the support element. In this method example, a highly precise positioning may be achieved in a convenient manner. In some variants, the sensor information may be used to inform operators, who may manually move the movable scaffold. In other variants of the example, the information from the sensors may be fed in an automatic moving system controlling the moving operation of the movable scaffold.

To ensure a safe and efficient operation while working on the blade area from the working platforms, the method provides for a block 130 comprising retaining the movable scaffold once located in the working position. In a further example method, this operation may comprise connecting the movable scaffold to the support element (e.g., to a blade mold) by means of magnetic forces and, more specifically, by means of at least one electromagnet. Different beneficial effects may be obtained by practicing this method. On one hand, not only the movable scaffold may be retained in a working position, but a direct connection with the support element may be achieved, which may further increase safety and operability during the blade manufacturing step. On the other hand, the use of magnetic forces may provide an easy method to establish the connection.

In some variants of the example, permanent magnets may be used. This may result in a simple passive system in which the magnetic strength may need to be dimensioned appropriately to ensure easy disconnection when needed. In some other variants, electromagnets may be used. Such variants may provide enhanced flexibility and may facilitate the operation by allowing activation of the electromagnets in blocks 130 (retaining the movable scaffold) and 140 (carrying out a manufacturing step) but easy deactivation at block 150 (release of the movable scaffold from its working position).

Depending on the dimensions of the blade mold and on the blade manufacturing step, at least two movable scaffolds supporting respective working platforms may be arranged adjacent to each other in their working positions in another example as also illustrated in, e.g., Figures 3A-3B, Figures 4A-4B or Figures 5A-5B. The use of movable scaffolds may provide for additional flexibility in terms of defining the dimensions of the overall working area. By moving different movable scaffolds and placing them adjacent to each other in their working positions, an effective working platform with an area corresponding to the sum of the areas of the individual working platforms may be obtained. This example may then provide increased versatility as a set of movable scaffolds of a certain size may be combined according to the portion of the blade mold or the blade part to be covered while conducting a certain manufacturing step. In this manner, dedicated scaffolds with specific sizes do not need to be built whenever a different blade mold or a new blade manufacturing step is required at a workstation.

In still another example comprising adjacent working platforms, a plate may be arranged between adjacent working platforms to substantially close a gap between the adjacent working platforms as explained with reference to Figures 6A-6B. A method comprising such a plate may be particularly useful when adjacent working platforms are arranged at an angle to each other while in their respective working positions. It is known that blade molds may exhibit some curvature, so adjacent working platforms may be arranged at a certain angle to properly conform to such curvature. Such arrangement may result in the formation of a gap between the working platforms and, more specifically, between the lateral edges of the working platforms where the platforms face each other. This may be specifically the case if working platforms of a certain geometry, e.g., substantially rectangular, are used.

Then, in this method example, a plate may be provided to close the formed gap. In variants of this example, the plate may be a separate plate that may be fastened, e.g., by bolting, at both ends of the adjacent working platforms to extend over the gap. In this case, the plate may be fastened at block 130, i.e., while retaining the movable scaffold and working platforms in their working position. Subsequentially, such plates may be unfastened in block 150 while releasing the working platforms so that they can be individually moved away from the supporting element or from the blade part in block 160.

In other variants of the example, a plate may be provided underneath the lateral edge of a working platform. The plate may be configured to slide in a translation movement so as to extend beyond the lateral edge of the working platform. In further examples, a plate may be provided underneath a lateral edge of a working platform, and it may be configured to pivot so that it may also be allowed to extend beyond the lateral edge of the working platform. In any case, the plate may be arranged underneath one of the adjacent working platforms so that the plate may slide under the other adjacent working platforms to close the gap between the platforms.

Examples of the method according to this disclosure may be used for different workstations and for different manufacturing steps. In a specific example, providing a support element in a workstation may comprise providing a support element supporting a first blade shell part and a second blade shell part bonded together and carrying out a blade manufacturing step may comprise carrying out at least one of sanding, grinding, painting, testing, or attachment of aerodynamic devices. Thus, in this example, a method is presented in which the movable scaffolds are primarily used for a blade finishing operation occurring at the last stages of the blade manufacturing process.

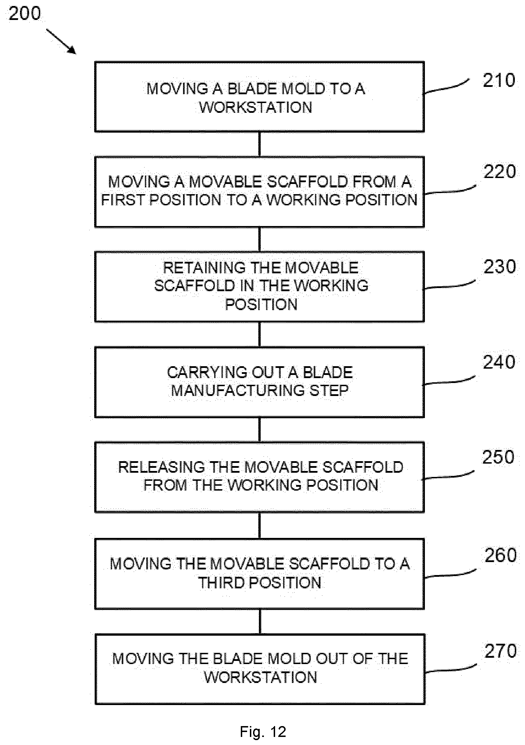

Figure 12 provides a flowchart to illustrate still a further example of a method 200 for manufacturing a rotor blade. This method has some manufacturing steps in common with the method explained with reference to Figure 11. Method 200 comprises, at block 210, moving a blade mold to a workstation. Once the blade mold is at the workstation, method 200 proceeds with steps 220 to 260, which are equivalent to methods 120 to 160 so no further explanation is deemed necessary. An additional step is added in method 200 which comprises moving the blade mold out of the workstation at block 270. This example provides flexibility not only in terms of the working platforms but also in terms of the overall flow of the blade manufacturing line which, in an example, may be similar to the one schematically illustrated in Figure 10. Thus, a blade mold is not only provided in a specific workstation but it is moved into the workstation, which allows the same mold to be conveyed among different specialized workstations where specific manufacturing steps are carried out. In order to move the blade mold, the method may comprise arranging the blade molds on a blade frame and providing the blade frame with sliding elements and/or wheels to enable movement.

This written description uses examples to disclose the teaching, and also to enable any person skilled in the art to practice the teaching, including making and using any devices or systems and performing any incorporated methods. The patentable scope is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims. Aspects from the various examples described, as well as other known equivalents for each such aspects, can be mixed and matched by one of ordinary skill in the art to construct additional examples and techniques in accordance with principles of this application. If reference signs related to drawings are placed in parentheses in a claim, they are solely for attempting to increase the intelligibility of the claim, and shall not be construed as limiting the scope of the claim.

## Claims

1. A system for use in the manufacture of a wind turbine rotor blade (10), the system comprising:
- a support element (82) for supporting a wind turbine rotor blade part;
- a movable scaffold (70), and a working platform (60) on top of the movable scaffold (70), wherein the movable scaffold (70) is configured to move from a first position to a working position, wherein the working position is closer to the support element (82) or to the wind turbine rotor blade part than the first position and is suitable for carrying out a blade manufacturing step; wherein the movable scaffold (70) and/or the support element (82) comprise a retention system for retaining the movable scaffold (70) in the working position.

2. The system of claim 1, wherein the support element (82) for supporting the wind turbine rotor blade part is movable.

3. The system of any of claims 1 or 2, wherein the support element (82) comprises a blade mold 80.

4. The system of any of claims 1 or 2, wherein the support element (82) comprises at least one cart for supporting the wind turbine rotor blade part and, more specifically, for supporting a wind turbine rotor blade.

5. The system of any previous claim, the system further comprising sensors to monitor a relative position between the working platform (60) and the support element (82) or between the working platform (60) and the wind turbine rotor blade part supported by the support element (82).

6. The system of any previous claim, wherein the retention system comprises at least one electromagnet configured to connect the movable scaffold (70) with the support element (82).

7. A production line (310) for manufacturing a wind turbine blade (10), the production line (310) comprising:
a first workstation (301);
a second workstation (302, 303);
one or more blade molds (180) for manufacturing one or more wind turbine blade shell parts;
a blade mold conveyor system for conveying the one or more blade molds from the first workstation (301) to the second workstation (302, 303); wherein the first (301) and/or the second workstation (302. 303) comprise a system according to any of claims 1 to 6.

8. A method for manufacturing a wind turbine rotor blade (10), the method comprising:
providing a support element (82) for supporting a wind turbine rotor blade part in a workstation;
moving a movable scaffold (70), the movable scaffold (70) supporting a working platform (60), from a first position to a working position closer to the support element (82) or from a first position to a working position closer to the wind turbine rotor blade part;
retaining the movable scaffold (70) in the working position;
carrying out a blade manufacturing step;
releasing the movable scaffold (70) from the working position;
moving the movable scaffold (70) away from the support element (82) or moving the movable scaffold (70) away from the wind turbine rotor blade part to a third position.

9. The method of claim 8, wherein providing a support element (82) for supporting a wind turbine rotor blade part in a workstation comprises moving the support element (82).

10. The method of any of claims 8 or 9, wherein the third position is the same as the first position.

11. The method of any of claims 8 to 10, wherein moving the movable scaffold (70) to a working position comprises moving the movable scaffold (70) to a position where substantially no gaps exist between the working platform (60) and the support element (82) or between the working platform (60) and the wind turbine rotor blade part supported by the support element (82).

12. The method of claim 11, wherein the working platform (60) comprises one or more extension planks (64) arranged along an edge of the working platform (60) facing the support element (82) or the wind turbine rotor blade part supported by the support element (82), and wherein the extension planks (64) are individually extended from a retracted position to an extended position so as to reduce a gap between the working platform (60) and the support element (82) or between the working platform (60) and the wind turbine rotor blade part supported by the support element (82).

13. The method of any of claims 8 to 12, wherein one or more movable scaffolds (70) are arranged extending, when in their working positions, along a portion of the support element (82) or along a portion of the wind turbine rotor blade part supported by the support element (82), the one or more movable scaffolds (70) being configured to be movable in the longitudinal direction of the support element (82) or the longitudinal direction of the wind turbine rotor blade part supported by the support element (82).

14. The method of any of claims 8 to 13, wherein providing a support element (82) in a workstation comprises providing a support element (82) supporting a first blade shell part and a second blade shell part bonded together, and wherein carrying out a blade manufacturing step comprises carrying out at least one of sanding, grinding, painting, testing, or attachment of aerodynamic devices.

15. The method of any of claims 8 to 13, wherein providing a support element (82) in a workstation comprises moving a blade mold (80) in the workstation; and wherein moving a movable scaffold (70) from a first position to a working position closer to the support element (82) comprises moving the movable scaffold (70) from a first position to a working position closer to the blade mold (80); and still wherein moving the movable scaffold (70) away from the support element (82) to a third position comprises moving the movable scaffold (70) away from the blade mold (80) to a third position; the method further comprising moving the blade mold out of the workstation.
